# EUROPEAN PATENT APPLICATION

(11) **EP 2 355 510 A1**
(43) Date of publication of application: **10.08.2011**
(21) Application number: 09290985.2
(22) Date of filing: 21.12.2009
(51) Int. Cl.: H04N 7/26, H04N 7/24, H04N 7/50

(54) **Method and arrangement for video coding**

(71) Applicant: Alcatel Lucent, 75008 Paris (FR)
(72) Inventor: Macq, Jean-François, 1083 Ganshoren (BE)
(74) Representative: Vandenbroeck, Josiane Anne Marie

(57) **Abstract**

A method for encoding at least one video stream (IV1, IV2), includes the steps of :
- receiving said at least one input video stream (IV1, IV2)
- construction of a sequence of predicted pixel blocks (PPB1,PPB2),
- processing said sequence of predicted pixel blocks (PPB1,PPB2) and corresponding blocks of said at least one input video stream (IV1, IV2) to obtain a sequence of processed residual pixel data (QRPD1, QRPD2),
wherein said sequence of predicted pixel blocks (PPB) is constructed from input encoding structure data (IESD) from reference input data (IREF), said input encoding structure data (IESD) further undergoing a combined entropy encoding step with said processed residual pixel data (QRPD) to thereby obtain at least one encoded video stream (EV1, EV2).
An encoder and several arrangements comprising such an encoder are disclosed as well.

## Description

The present invention relates to a method for video coding.

Encoding of multimedia streams such as audio or video streams has been extensively described in the literature and is standardized by means of several standards. Most video coding standards describe advanced compression techniques that were developed to enable transmission of video or audio signals at a lower bit rate, and generally only specify the syntax of a video stream and the decoding process. Although the encoding process itself is not standardized, most existing encoders follow more or less the same reference architecture whereby the bulk of the processing comprises computing encoding related syntax elements. These include syntax elements that are not residual data and may comprise slice header and header data for each macro block within a slice, including intra-prediction modes, resp. motion vectors, for intra-coded, resp. inter-coded, macroblocks, etc. In for instance the H.264/AVC video coding standard, these syntax elements are denoted Category 2 syntax elements, thus containing only syntax elements for describing an underlying encoding structure of the encoded stream, but no further information on the pixel values.

Most traditional encoders further construct a sequence of predicted pixel blocks, from the received input video data and from these calculated encoding related syntax elements. These predicted pixel blocks are processed by e.g. subtracting them from corresponding blocks of the input video stream or vice versa, to thereby obtain a sequence of residual pixel blocks. This sequence of residual pixel blocks is usually further transformed and quantized to obtain a sequence of processed residual pixel data. In e.g. H.264 encoders these processed residual pixel data correspond to Category 3 and 4 syntax elements.

These processed residual pixel data are further undergoing a combined entropy encoding step together with the encoding related syntax elements. The resulting combination of the encoded residual pixel data and the encoded encoding related syntax elements forms a traditional encoded video stream.

Although such encoding methods are now widespread, they still require a lot of processing power since an encoder needs to compute the encoding structure related syntax elements for each input stream, which requires a lot of processing effort.

It is therefore an object of the present invention to describe an alternative encoding method for encoding at least one video stream, which requires less processing power and which will result in more power efficient encoders.

According to the invention this object is achieved by the method comprising the steps of receiving said at least one input video stream, constructing of a sequence of predicted pixel blocks , processing said sequence of predicted pixel blocks and corresponding blocks of said at least one input video stream to obtain a sequence of processed residual pixel data ,
wherein said sequence of predicted pixel blocks is constructed from input encoding structure data from reference input data, said input encoding structure data further undergoing a combined entropy encoding step with said processed residual pixel data to thereby obtain at least one encoded video stream.

In this way, by providing reference input data from which an input encoding structure can be simply derived or extracted, and by constructing therefrom the predicted pixel blocks, a simple and improved method is obtained as this encoding structure has no longer to be computed by the encoder itself but is instead either directly provided to the encoder, or provided under a form allowing easy extraction or derivation.

The combined entropy encoding step may comprise an entropy encoding step of the input encoding structure and the processed residual data followed by a combining step of the encoded encoding structure and the encoded residual data, or a combining step of the input encoding structure and the processed residual data followed by an entropy encoding step of the combined input encoding structure and processed residual data, or any other sequence of possible combinations of parts of such actions.

The processing of the residual pixel blocks can comprise generating a sequence of residual pixel blocks from the difference between said predicted pixel blocks and corresponding blocks of said at least one input video stream, transforming and quantizing said sequence of residual pixel blocks to thereby obtain said sequence of processed residual pixel data.

Alternatively the processing of the residual pixel blocks can comprise generating a sequence of residual pixel blocks from the difference between said predicted pixel blocks (PPB1,PPB2) and corresponding blocks of said at least one input video stream (IVI, IV2) , and filtering the residual pixel blocks to obtain said sequence of processed residual pixel data.

In some embodiments the reference input data comprises encoded input encoding structure data such that the input encoding structure data is derived from said reference input data by entropy decoding said reference input data.

Yet other variant embodiments further include a step of comparing configuration data of the at least one input video stream with the input encoding structure data and, if the data do not match, said at least one input video stream is further preprocessed to thereby generate at least one updated input video stream such that the residual pixel blocks are determined from the difference between said predicted pixel blocks and corresponding blocks of said at least one updated video stream.

This can further improve the encoding process in some cases where these optional configuration data are comprised within the input video streams as will be further explained in the descriptive part.

A further alternative method includes additional steps of inverse quantization and inverse transformation of the processed residual pixel blocks for further use during the construction of said predicted pixel blocks.

This still can further improve the accuracy of the encoding.

The method may further comprise a step of generating reference input data from a reference encoded stream.

This reference encoded stream can be obtained by traditionally encoding a reference video input stream.

In yet another alternative method the at least one input stream can be generated from such a reference video stream and some input modification data. This has the advantage that one encoding structure from one reference stream can be used in common for encoding a lot of streams derived from such a reference stream by the combination of this reference stream and respective input modification data. In contrast to the prior art methods where for each of such resulting video stream the complete encoding process had to be performed, now only one reference stream has to be encoded, and its encoding structure can be re-used for the coding of all video streams derived from this single reference stream. This saves a considerable amount of encoding processing power, and during possible transmission of the encoded streams, also a lot of transmission bandwidth. If these resulting encoded streams have to be stored, also less storage capacity is needed

In yet another variant method for encoding several video streams in parallel, one of these streams can be selected as the reference stream, from which the encoding structure is then determined, and which is further re-used for encoding the other video streams.

Again this variant has the advantage of reducing the processing power with respect to the prior art solution of encoding each of these video streams separately. Similar considerations of reduced bandwidth and storage capacity are valid as with respect to the previous variant.

The present invention relates as well to an encoder, apparatus and arrangements for performing the aforementioned methods.

Further embodiments are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a basic scheme of an embodiment of a prior art encoder,
Figs. 2a-d show embodiments of an encoder according to the invention,
Figure 3 shows another embodiment of an encoder according to the invention,
Figs 4a and 4b show other embodiments of encoders according to the invention, each receiving more than one input video each,
Fig. 5 shows another embodiment of an encoder according to the invention,
Fig. 6a shows an embodiment A of an apparatus to generate a reference input data IREF which can be used as input to the embodiments of the previous figures 2 to 5,
Fig. 6b shows a particular embodiment B of an apparatus as in Fig. 6a but for the specific case of an encoded bitstream using an additional data partitioning feature, e.g. according to the H.264 standard.
Fig. 7 shows an embodiment of a first arrangement A1 including an embodiment of an apparatus A as in fig. 5 and an embodiment of an encoder such as displayed in Fig. 4b ,
Fig. 8 shows an embodiment of a second arrangement A2 itself comprising a first arrangement A1 as in depicted Fig. 7,
Fig. 9 shows an embodiment of a third arrangement A3 comprising a second arrangement A2 as depicted in Fig. 8,
Fig. 10a shows an embodiment of a fourth arrangement A4 comprising a first arrangement A1 as depicted in Fig. 7, and
Fig. 10b shows an alternative embodiment A4b of such a fourth arrangement.

It is to be remarked that the following merely illustrates the principles of the invention. It will thus be appreciated that those skilled in the art will be able to devise various arrangements that, although not explicitly described or shown herein, embody the principles of the invention. All examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is also to be understood that throughout this document the notation "input video stream" and output video stream" refer to input and output data which can have the form of real streaming video but can also related to (stored) data files, or any combination of these. The embodiments set out in this description therefore refer to both online and offline encoding of these video data and to any combination thereof.

Before discussing embodiments of the encoder according to the invention a brief discussion of the H.264 prior art encoding method will be given. According to this standard each video frame is thereby subdivided and encoded at the macroblock level, where each macroblock is a 16x16 block of pixels.

Macroblocks can be grouped together in slices to allow parallelization or error resilience. For each macroblock, the coded bitstream contains, firstly, data which signal to the decoder how to compute a prediction of that macroblock based on already decoded macroblocks and, secondly, residual data which are decoded and added to the prediction to re-construct the macroblock pixel values. Each macroblock is either encoded in "intra-prediction" mode in which the prediction of the macroblock is formed based on reconstructed macroblocks in the current slice, or "inter-prediction" modes in which the prediction of the macroblock is formed based on blocks of pixels in already decoded frames, called reference frames. The intra-prediction coding mode applies spatial prediction within the current slice in which the encoded macroblock is predicted from neighbouring samples in the current slice that have been previously encoded, decoded and reconstructed. A macroblock coded in intra-prediction mode is called an 1-type macroblock. The inter-prediction coding mode is based on temporal prediction in which the encoded macroblock is predicted from samples in previous and/or future reference frames. A macroblock coded in inter-prediction mode can either be a P-type macroblock if each sub-block is predicted from a single reference frame, or a B-type macroblock if each sub-block is predicted from one or two reference frames.

The default H.264 behaviour is to group macroblocks in raster-scan order (i.e. scanning lines from left to right) into slices. The H.264 standard however further introduced another feature, referred to as flexible macroblock ordering, hereafter abbreviated with FMO. FMO partitions a video frame into multiple slice groups, where each slice group contains a set of macroblocks which could potentially be in nonconsecutive positions and could be anywhere in a frame.

For transport each slice can be transported within one network abstraction layer, hereafter abbreviated by NAL, unit, using default mode. However the H.264/AVC standard further describes an additional feature of data partitioning of each slice over several NAL units, to improve the error resilience during the transport of the slice.

According to this feature of data partitioning of one slice over several Partitions, the encoded contents of one slice will be distributed over 3 NAL units: a NAL unit partition A, a NAL unit partition B, and a NAL unit partition C. According to the standard, the NAL unit partition A will contain Category 2 syntax elements of that slice, representing all slice-related syntax elements that are not residual data. These category 2 syntax elements comprise slice header and header data for each macro block within a slice, including intra-prediction mode, resp. motion vectors, for intra-coded, resp. inter-coded, macroblocks, etc. The NAL unit partition B will contain the Category 3 syntax elements, that is the intracoded residual data of the macroblocks of the slice under consideration, if intra prediction coding was used, and the NAL unit partition C will contain the Category 4 syntax elements, that is the intercoded residual data, if this type of coding was used.

According to the H.264 standard, this data partitioning mechanism can be applied to any slice of the stream, except for slices of an Instantaneous Decoding Refresh (IDR) picture. IDR pictures are pictures which consist only of intra-coded slices and which guarantee that all previous reference picture will no longer be used for inter-frame prediction in the following pictures of the streams. IDR pictures are usually used to provide access points in the coded stream or to increase error resilience.

These NAL units are further encapsulated into packets, for transport over a network towards a receiver containing a decoder for decoding the received packets again so as to allow the original frames to be reconstructed for display.

In the case of an output stream without data partitioning, the Categories 2, 3 and 4 syntax elements of a given slice are grouped together in the same NAL unit as specified by the coding standard. The syntax elements pertaining to the encoding structure and to the residual data are thus mixed in the same NAL unit. In the case of an output bitstream using data partitioning, for a given slice the syntax elements of Categories 2, 3 and 4 are respectively put in different NAL units, identified as Partition A, B and C NAL units respectively. The encoded residual pixel data is thus contained in the partition B and C NAL units, while the encoded category 2 syntax elements are contained in the partition A.

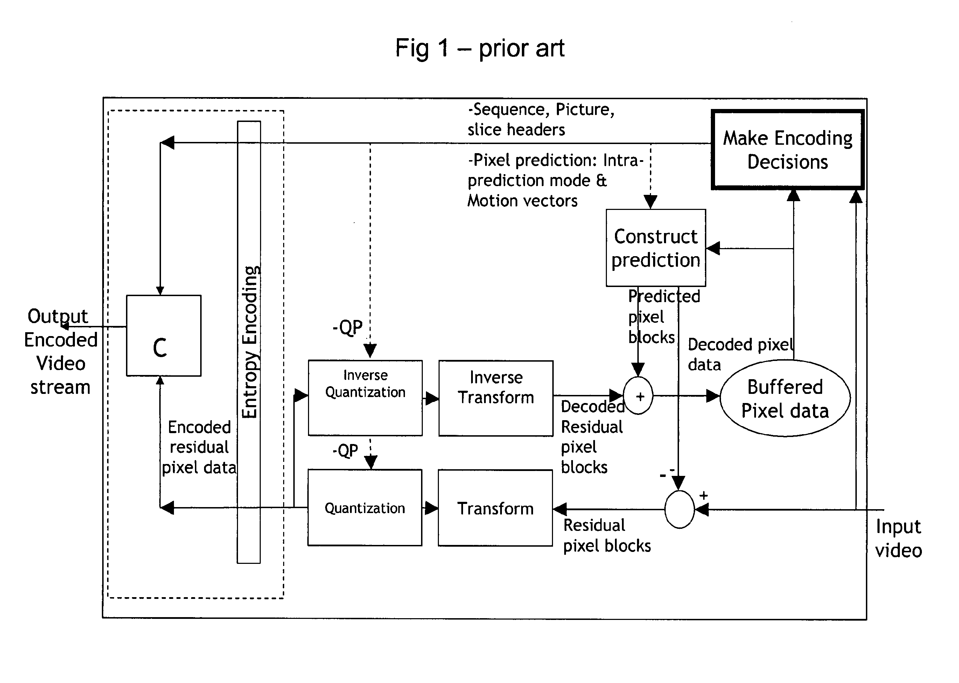

Figure 1 shows the main components of a typical prior art video encoder. The input video stream comprises raw input video data: the pixel color values itself as well as optionally some additional input data such as the frame size expressed in number of pixels in horizontal and vertical direction, the frame rate, the color space e.g. YUV or RGB , the type of chroma sampling e.g. expressed as 4:2:0 or 4:4:4 if YUV is used, etc. This input video stream is on one hand forwarded to a module denoted "make encoding decisions" which is adapted to make encoding decisions such as to provide the syntax elements related to the encoding itself. These syntax elements, in H.264 also denoted as category 2 syntax elements, typically include data like the sequence and picture parameters sets, slice and macroblocks headers as well as all the information that will later explain to a decoder how to construct the intra- and inter-prediction of pixel data based on already decoded portions of the video. These syntax elements are further entropy encoded in a similarly named block which provides encoded syntax elements. On the other hand the input video stream is also forwarded to a unit for determining the difference between predicted pixel blocks as provided by a prediction construction module, and corresponding blocks from the input video. The prediction construction module, denoted "construct prediction" on Fig. 1 is coupled itself to the "make encoding decisions" module to enable the generation of the predicted pixel blocks from these syntax elements.

The resulting residual pixel blocks are then further transformed and quantized in similarly named modules, such as to result in the processed residual pixel data.

In H.264 encoders these residual pixel data correspond to Category 3 and 4 syntax elements.

In most prior art encoders the computation of the block transform and quantization is performed in the forward but, usually, also in the reverse direction as is depicted by the feedback in Fig. 1. These feedback steps are usually added to make sure that the encoder uses the same sets of decoded frames as a decoder to make the predictions. Such encoders are called "closed-loop" encoders, by opposition to "open-loop" encoders, where these feedback steps are not present.

The main differentiator between prior art encoders usually resides in the way they make the encoding decisions for generating the underlying encoding structure as this implies making a choice of type of frame, slicing, intra. Vs inter-prediction, choice of intra-prediction modes and computation of motion vectors, etc. These steps are thus generally performed within the block "make encoding decisions" and usually significantly add to the complexity of an encoder.

Both the syntax elements related to the encoding as well as the encoded residual pixel data are finally to be entropy encoded to generate one single encoded video stream from the input video stream. This combined entropy encoding is performed in a module with usually comprises an entropy encoder and a combiner C. Entropy encoding is to be understood as comprising the operations to compress both syntax elements as well as the residual pixel blocks. These operations comprise predictive coding, the variable length coding (Exp-Golomb, CAVLC) or arithmetic coding (CABAC) steps as specified e.g. in the H.264 standard. It can be performed before or after the combination of the syntax elements and the residual pixel blocks. In the embodiment depicted on Fig. 1 entropy encoding is performed before the combination but in other prior art encoders this sequence is reversed.

In H.264 encoders this combining step may further comprise the packetization into NAL units, as previously explained.

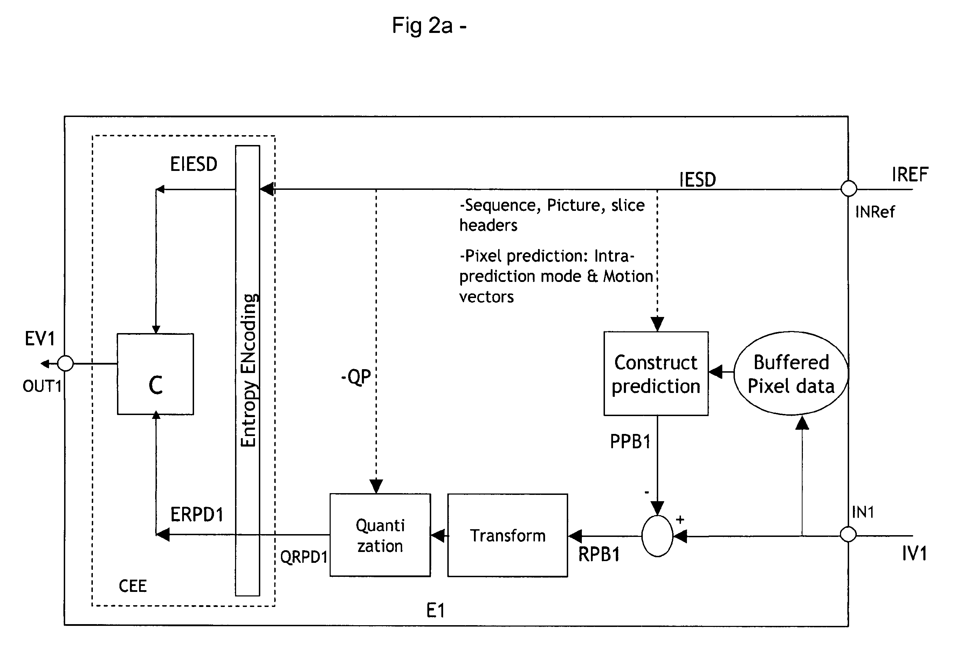

With respect to these rather complex prior art encoders, an embodiment of an encoder according to the invention is presented in Fig. 2a. This embodiment E1 includes a first input terminal IN1 for receiving an input video stream, which can thus be a real stream, but also a stored file as previously explained. This input video is denoted IV1. As explained with reference to Fig. 1, this input video may comprise the same raw video data such as the pixel color values itself as well as optionally some additional input data such as the frame size expressed in number of pixels in horizontal and vertical direction, the frame rate, the color space e.g. YUV or RGB , the type of chroma sampling e.g. expressed as 4:2:0 or 4:4:4 if YUV is used, etc. This embodiment E1 is further adapted to construct a sequence of predicted pixel blocks, denoted PPB1, and to process said sequence of predicted pixel blocks together with corresponding blocks of the incoming video stream. In the embodiment E1 this processing comprises the generation of a sequence of residual pixel blocks, denoted RPB1, from the predicted pixel blocks and from corresponding blocks of the incoming video stream, and transforming and quantizing the residual pixel blocks to obtain a sequence of processed residual pixel data. However other methods to obtain processed residual pixel data from the predicted pixel blocks and corresponding blocks of the input video stream are possible. A difference with the prior art encoder is that this embodiment E1 now comprises an additional input terminal, denoted INRef, for receiving reference input data, denoted IREF, from which input encoding structure data denoted IESD is derived or taken. In the embodiment of Fig. 2a IREF merely comprises such an input encoding structure such that the input IREF does not have to undergo any further processing for obtaining IESD. This input encoding structure data is now used for the construction of the predicted pixel blocks leading to a much lower complexity compared to that of the previously described prior art encoder. As an encoding structure is taken as an additional input based upon which the prediction pixel blocks are construed, no detailed analysis of the video sequence as performed in the prior art "make encoding decisions" block is needed any more. The complexity of the encoding process is thereby significantly reduced.

The residual pixel blocks RPB1 may further undergo filtering step or alternatively a transformation and quantization step, as shown in fig. 2a. The processed residual pixel data QRPD1 are then provided, together with the input encoding structure data IESD to a combined entropy encoding module denoted CEE, which in the embodiment of Fig. 2a, comprises an entropy encoding module followed by a combining module C. However other embodiments for CEE are possible and can comprise a combining module followed by an entropy encoding module, or can comprise a sequence or set of such modules, in case entropy encoding is performed sequentially or in parallel e.g. on separate parts of the data.

As previously mentioned with respect to Fig. 1, entropy encoding is to be understood as comprising the operations to compress both syntax elements as well as the residual pixel blocks. These operations comprise predictive coding, the variable length coding (Exp-Golomb, CAVLC) or arithmetic coding (CABAC) steps as specified e.g. in the H.264 standard. It can be performed before or after the combination of the encoding structure data and the residual pixel blocks.

The entropy encoding of the processed residual pixel data will yield encoded residual pixel data denoted ERPD1, while the entropy encoding of the input encoding structure data IESD will yield encoded input encoded structure data, denoted EIESD. The combination of both will finally result in the encoded output video stream IV1.

The reference input data IREF can be provided as a stream of data, or as a standalone data file, or a combination of these. Examples of such reference input data will also be given and explained in a later paragraph of this document.

It is further to be remarked that for all embodiments described in this document it is understood that appropriate buffer management circuitry and control are present to control the pixel data storage and provision to and from the buffer denoted by "buffered pixel data" in all drawings. Buffer management techniques are well known to a person skilled in the art and as these are not necessary for understanding the embodiments of this invention, these control modules are not shown in order not to overload the drawings.

As mentioned previously all step for the encoding of the input video stream IV1 to finally obtain the encoded video stream EV1 can also be performed by one single processor.

Compared to the prior art encoder of Fig. 1, the embodiment of Fig. 2a does no longer comprise the decoding feedback loop of inverse quantization and inverse transformation. This open-loop architecture could sometimes lead to a quality drift at the decoder, although the impact on quality has been shown to be small when the encoding is done at a sufficiently high bitrate/quality operating point (see for instance J.S. McVeigh and S.-W. Wu, "Partial closed loop versus open loop motion estimation for HDTV compression", International Journal of Imaging Systems and Technology, vol. 5, no. 4, 1994, pp. 268-275.). In addition, because they break the inter-frame prediction chain, IDR pictures regularly inserted in the bitstream can also be used as resynchronization points for the reference frames used at the encoding and decoding sides, thus limiting the propagation of the quality drift across consecutive frames.

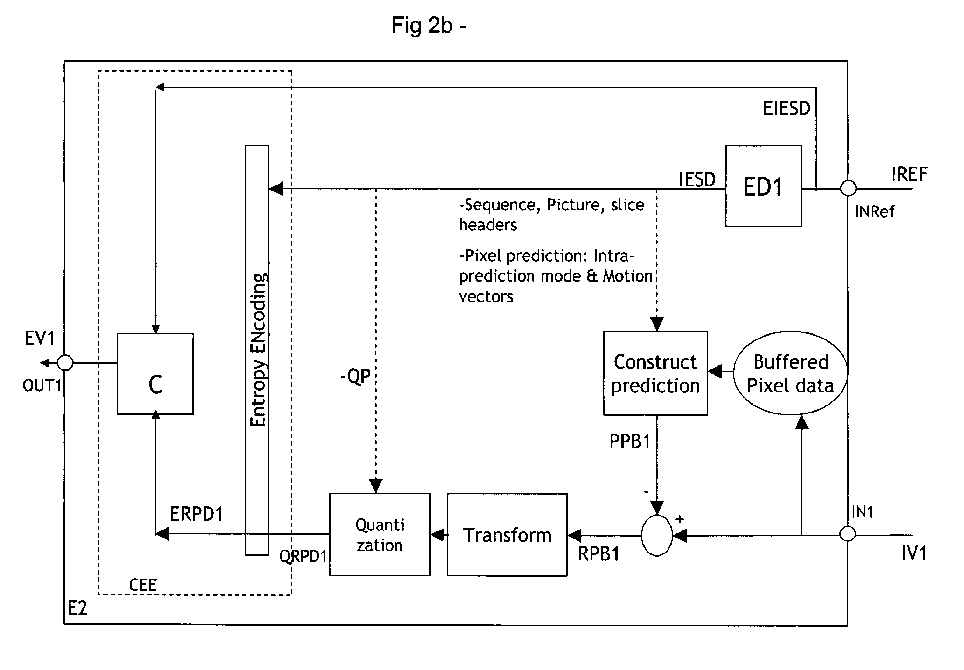

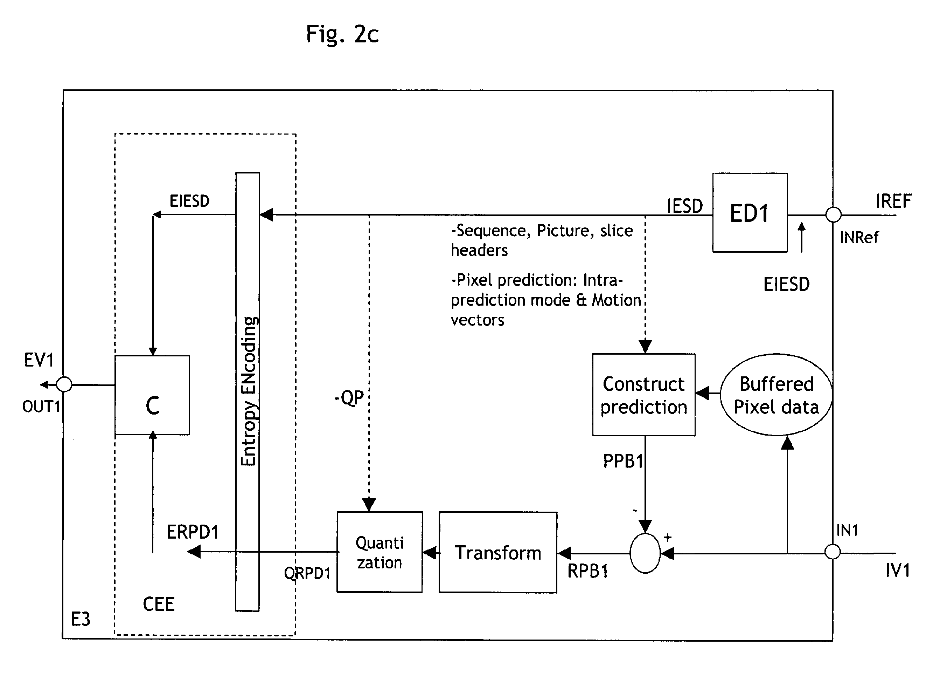

Figs 2b and 2c show some variant implementations of encoders E2 and E3 . For both embodiments the reference input data IREF comprises the input encoding structure in encoded form, denoted EIESD, such that this first has to be entropy decoded for obtaining the input encoding structure data IESD which can be used for the construction of the predicted pixel blocks. In both variants this entropy decoding is performed by a module denoted ED1. The decoded input encoding structure data IESD may undergo an additional combined entropy encoding with the processed residual pixel data QRPD1 as shown in the embodiment of fig. 2c, or the reference data comprising the encoded encoding input structure EIESD can be straightforwardly provided to the combining module C of such a combined entropy encoding module CEE, as shown in the embodiment of Fig. 2b.

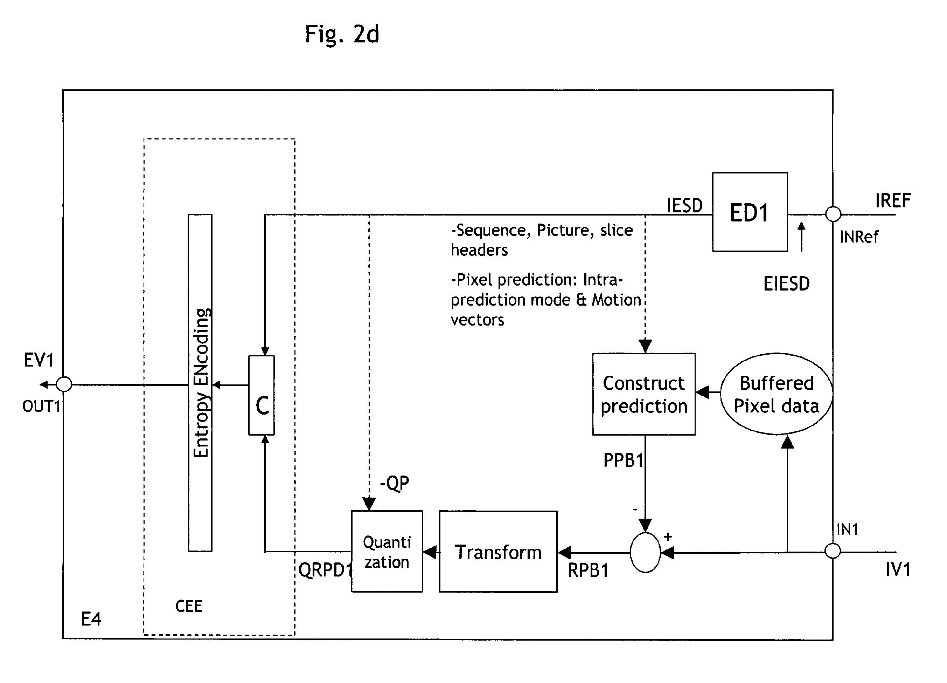

Fig 2d shows an embodiment E4 with an alternative combined entropy encoding module CEE, thus wherein the input encoding structure data IESD can be first combined with the processed residual pixel blocks QRPB1, before entropy encoding of the combined data.

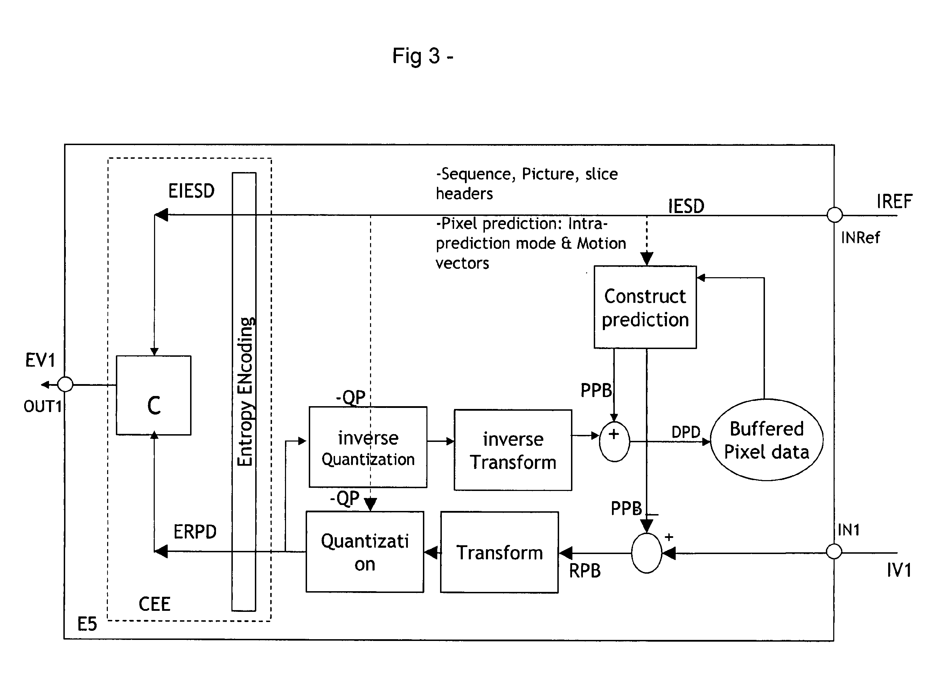

Fig. 3 shows an embodiment of an encoder E5 with modules for performing feedback steps of inverse quantization and inverse transform. These are adapted to generate equivalent decoded residual pixel blocks that are then added to the predicted pixel blocks PPB to generate decoded pixel data DPD which are temporarily buffered or stored . Compared to the open-loop embodiments of Figs 2a-c, this closed loop embodiment of Fig. 3 is more robust, as it will further prevent quality drift.

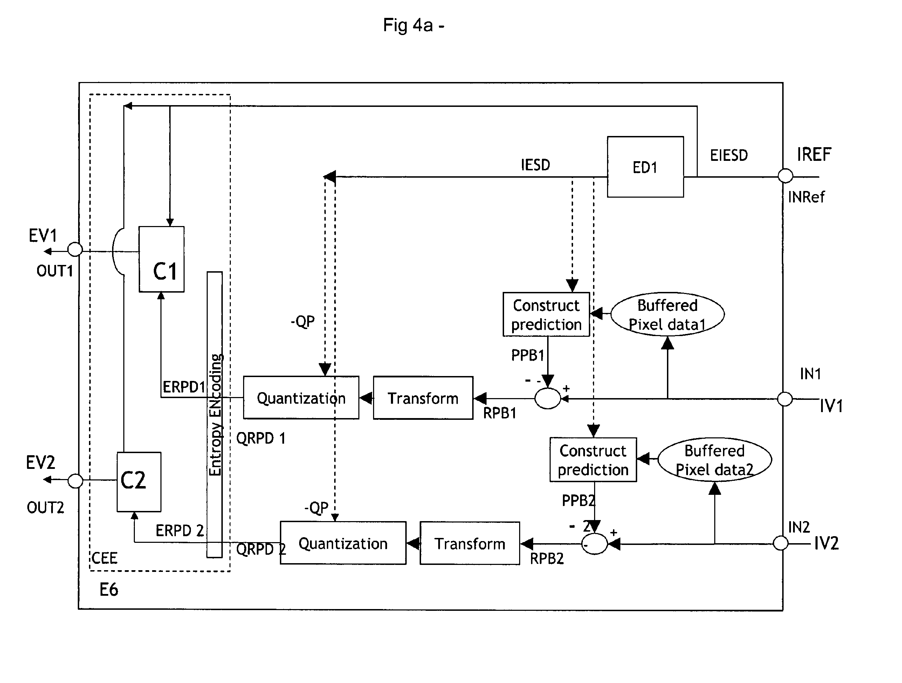

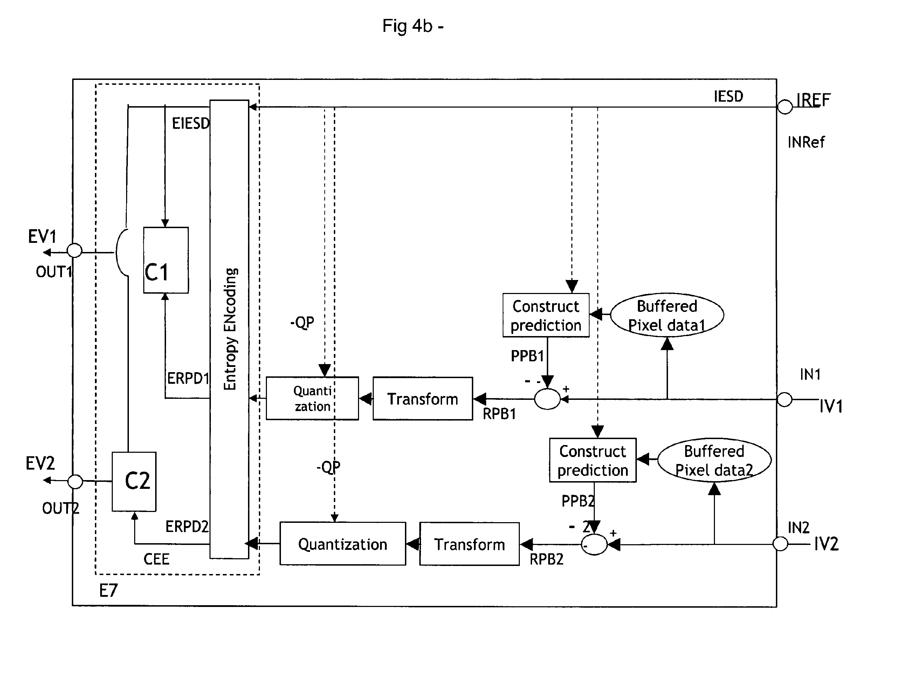

Figs 4a and 4b show embodiments of encoders for encoding two input video streams, denoted IV1 and IV2, received on respective input terminals IN1 and IN2. In the embodiment E6 depicted in Fig. 4a the reference input data IREF comprises entropy encoded input structure data EIESD which is first to be entropy decoded for obtaining the input encoding structure data IESD. This data is used in common for the construction of the predicted pixel blocks for both input video streams IV1 and IV2, and the quantization parameters extracted therefrom are as well used in common. The respective encoded residual pixel data ERPD1 and ERPD2 for video stream IV1 and IV2 are combined with the input encoding structure data IESD in respective combining modules C1 and C2, such as to obtain the respective encoded output video streams EV1 and EV2 for provision to respective output terminals OUT1 and OUT2.

In the embodiment E7 depicted on Fig. 4b, the reference input data IREF comprises non-encoded input encoding structure data IESD, which therefore can be readily used without any further decoding. As in the embodiment E1 of Fig. 2a, this input encoding structure IESD needs to be entropy encoded, before being combined with the respective encoded residual pixel data ERPD1 and ERPD2 . But other embodiments of a combined entropy encoding module CEE may have the order of the entropy encoding and combination reversed.

Compared to the prior art situation, where for each input video stream encoding decisions have to be made before and from which the predicted pixel blocks can be constructed, the described embodiments E1 to E7 are now seriously simplified by the fact that an input encoding structure is externally provided and is used in common for constructing the predicted pixel blocks of the respective input video streams.

The reference input data IREF can comprise an encoding structure which can e.g. be deduced or derived from an already encoded video stream, or can comprise data based on an a priori knowledge of the input video stream structure. The generation of the reference input data comprising input encoding structure data in some form, will be explained in a later paragraph .

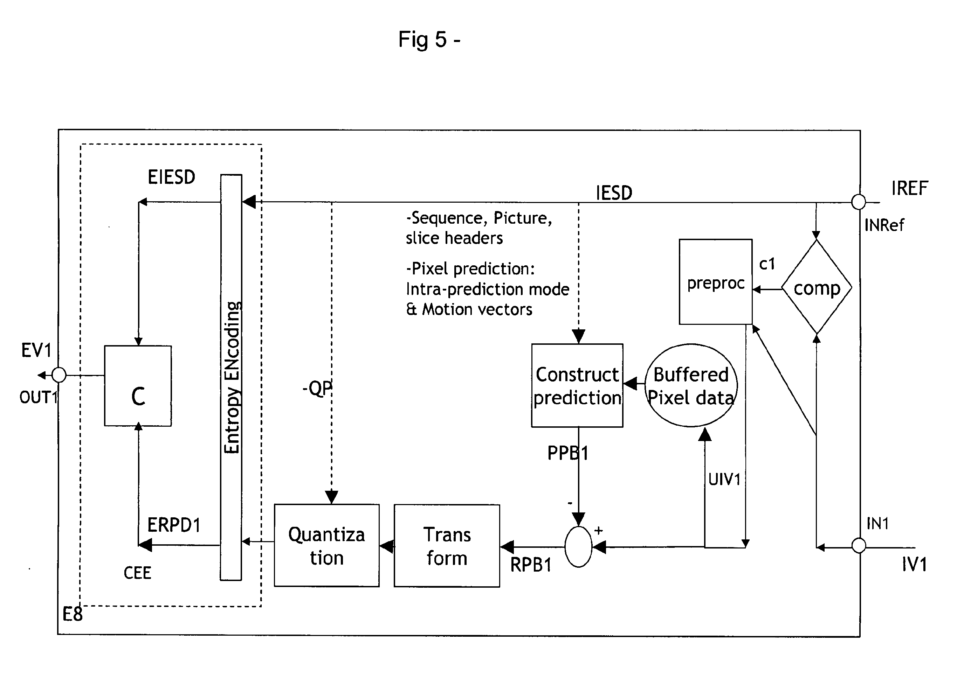

In some embodiments, such as embodiment E8 depicted in Fig. 5, the encoding quality can be further improved by first performing a check whether all or part of video metadata optionally comprised within the input video stream match the input encoding structure data. The metadata to be compared may comprise configuration data such as the frame size e.g. expressed in number of pixels in the horizontal and vertical directions, the frame rate, the color space, the type of chroma sampling, and the number of frames of the input video sequence to be encoded etc. If these are present in the input video stream, these should preferably be similar to the ones embedded in the input encoding structure data provided by IREF. If it is not the case, special preprocessing operations such as spatial scaling, color space conversion, chroma format conversion, and conversion of the frame rate or fractioning in several subsequences, etc, all according to well-known state-of-the-art techniques, can still be done on the input video stream IV1 as a preprocessing step in order to fulfill these constraints. Therefore, the embodiment E8 comprises a comparison module denoted "comp", adapted to verify that these or part of these configuration parameters provided within the input video stream IV1 are compatible with the input encoding structure data. It is to be remarked that this embodiment may be preferred in case such metadata are provided, if not the previous embodiments of encoders can also be used. If the configuration data match the input encoding structure data the input video stream will be further encoded as e.g. shown in the embodiments of Figs 2a-d. Otherwise an extra preprocessing module denoted "preproc" will be used wherein the input video stream is first preprocessed in the pixel domain using the aforementioned state-of-the-art transformation, for obtaining a preprocessed or updated video stream, which will then be submitted to the other operations as shown in figs 2a-d. In the embodiment depicted in Fig. 5 the control signal c1 denoted by the arrow from the comparison module to the preprocessing module informs the preprocessor to either perform these operations on the input video IV1 or not. In case no preprocessing is needed, which can thus also be the case for input video streams not containing any of such configuration data, the preprocessor just outputs the input video stream as such; in case preprocessing is needed, this is accordingly performed .The output from this preprocessing module, representing either the preprocessed video stream or the original video stream itself is denoted UIV1. The updated pixel data from this updated video stream is then used together with the input encoding structure data, for constructing the predicted pixel blocks PPB1.

Of course a lot of other embodiments are possible for realizing this variant method.

As mentioned before embodiments of encoders according to the invention can operate on reference input data comprising encoded or non-encoded encoding structure input data, and may comprise at their input INRef some additional analysis means for checking whether or not the reference data IREF is already encoded or not, and to select, extract or derive from IREF, the appropriate encoding structure IESD, based on this analysis.

To further improve the performance it may be sometimes recommended that the input reference stream IREF does not contain any I_PCM macroblocks. This can again be checked and corrected if needed by an extra analysis and correction module in these particular encoder embodiments. A person skilled in the art is able to provide such module.

Yet other embodiments of encoders according to the invention may combine one of the previously described embodiments with state-of-the-art encoding mechanisms as described with reference to Fig 1. As an example, such an embodiment can be adapted to, for each slice, first compute the residual data of that slice according to the method explained with reference to e.g. Fig 3, and, after addition with the predicted pixel blocks of that slice, compare the obtained decoded slice computed by the feedback steps with the same slice in the input video. If the quality of the decoded slice with respect to the original slice and measured e.g. using Peak Signal-to-Noise Ratio (PSNR), is below a certain threshold, then the original slice can be redirected to a state-of-the-art encoder such as the one of Fig 1 in order to compute a new encoding structure yielding a coded slice of better quality. In this case, the output encoding structure for that slice consists of this new encoding structure, instead of the encoding structure provided as input. Note that this switching decision between a state-of-the-art encoder and an encoder as shown in the previous embodiments, can also be made at a coarser granularity e.g. at the frame level, or at the sequence level, or at finer granularity, e.g. at the macroblock level. Note that, in the latter case, if the encoding structure of a macroblock is modified, then for all the subsequent macroblocks in the same slice, all the syntax elements that depend on the modified macroblock also need to be recomputed and re-encoded. This may arise for instance due to the predictive coding of the quantization parameters QP, motion vectors and intra-coding modes, or due to a change of context for syntax elements encoded with a context-based adaptive coding.

Reference input data IREF comprising encoding structure data can be generated and provided to the encoder in many ways. We describe here 3 possibilities, but it is possible to envisage many others.

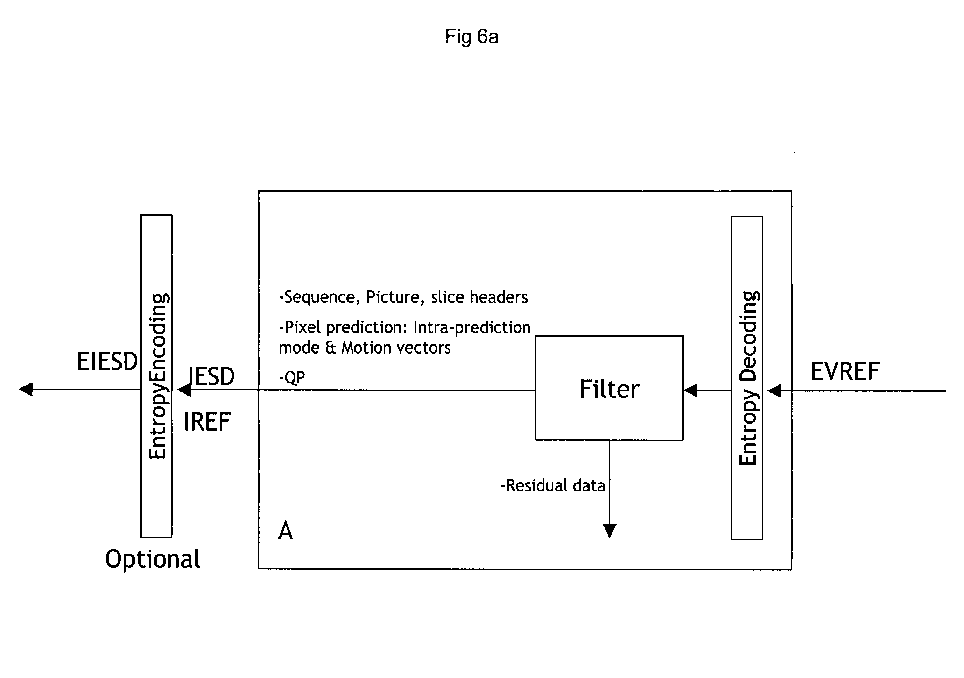

A first possibility is to use encoding structure data of a reference video stream previously encoded. Preferably the spatial and temporal structure of this reference stream should be similar to the one of the video stream or streams to be encoded. But even if this is not the case, encoding of an input video stream can still take place without any functional problems, and could possibly result in a less optimum compression rate or PSNR fidelity. An embodiment of an apparatus A for deriving encoding structure data from such an encoded reference video stream EVREF is shown in Figure 6a. This apparatus A is adapted to receive this encoded reference video stream EVREF, and is further adapted to entropy decode, and further parse or analyze the encoded data, so that a filter can subsequently extract all the syntax elements which pertain to the encoding structure such as to separate them from the residual pixel data. The parsing or analysis can also be performed by the filter itself, so therefore no separate modules are drawn for this. The thus filtered input encoding structure data or stream IESD can then be readily used as input reference data IREF for embodiments of encoders previously described. Optionally the input encoding structure data IESD can again be compressed by an extra step of entropy encoding, if such compression or encoding of these data could be desired for other purposes. The resulting data is denoted EIESD.

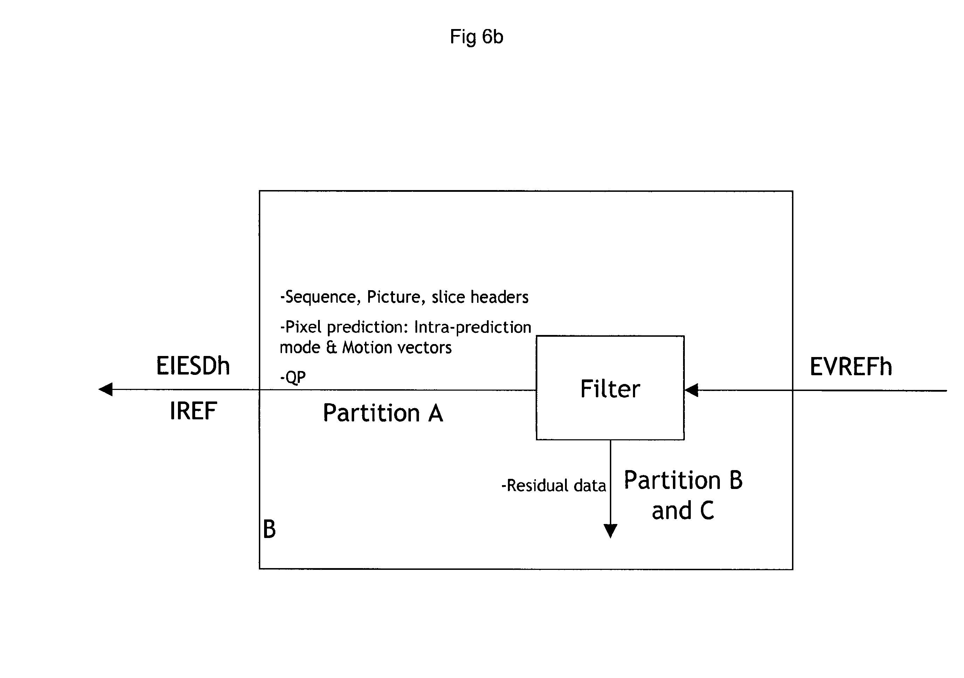

Figure 6b shows an alternative embodiment B for such an apparatus which is suitable to be use for deriving reference input data IREF from a previously encoded reference video stream EVREFh, where this previous encoding was performed using an additional data partitioning feature, e.g. according to the H.264 standard. Thanks to the earlier data partitioning, the encoded reference video stream EVREFh can now simply be filtered at the NAL unit level to separate the NAL partition A packets from the NAL partition B and C . Although no entropy decoding is needed before the filtering operation, it is to be remarked that the NAL unit A partitions are still comprising encoded input encoding structure data, denoted EIESDH. The reference input data IREF therefore comprises encoded input encoding structure data which then is preferably provided to embodiments of encoders such as the ones depicted in Figs 2b and 2c, as these comprise additional entropy decoders for deriving the input encoding structure data IESD from IREF.

Another possibility is to further create the input encoding structure data IESD directly from an a priori knowledge of the structure of the input video stream to be encoded, this knowledge itself being related to an application which will uses the encoded video. If, for instance, such an application already provides some knowledge on how pixels will be grouped in a picture e.g. in well defined windows and how these groups will evolve spatially within the subsequent pictures, this information can readily be converted into an encoding structure data or stream that can be used for compression of the video stream itself, depending on the accuracy of the video model given by the application. This can be illustrated by means of a simple example where it is assumed that, for a given application, the video will be a logo moving on a background of uniform color. It is further assumed that the logo has a rectangle shape parallel to the border of the image with width and height that are multiple of 16. It is further assumed that its displacement over time within the picture is known and that at every point in time, it is located in such a way that it only spans full macroblocks as this is possible since dimensions that are multiple of 16 are assumed. It is finally assumed that the logo never covers macroblocks of the first row or the first column of macroblocks. Therefore irrespective of the logo or the background color itself, encoding structure data can be generated that translates this assumed knowledge of the video structure into this encoding structure as follows :
- in the first picture, intra-coding mode is used to propagate the background color of the first (top-left) macroblock color to the rest of the background and, for the set macroblock covered by the logo, arbitrary intra-coding modes and QP values are used. The compression efficiency for the logo macroblock is here likely to be low, since the pixel values of the logo are not known in advance.
- In the following pictures, since the motion of the logo relative to the previous picture is known and can always be expressed as multiple of 16, each macroblocks is either fully in the background or one of the initial macroblock of the logo. Each frame from the second frame can therefore be encoded as a single P-slice and all the motion vectors can be computed in advance for each entire macroblock.

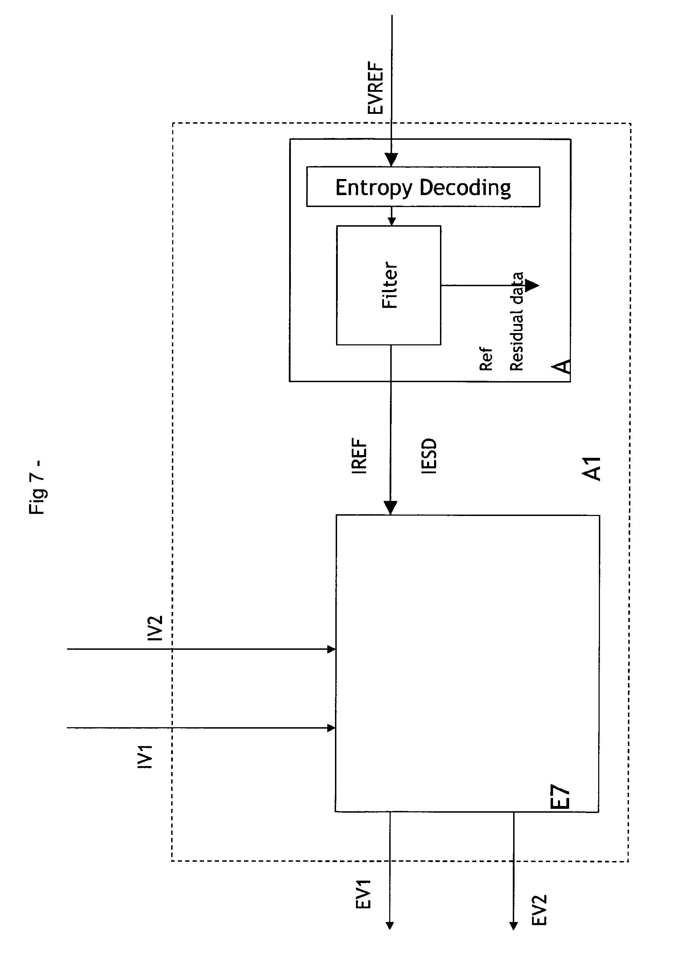

Embodiments of encoders according to the present invention have a lot of applications. A first application is depicted in Fig. 7 and shows an arrangement A1 for encoding one or several input video streams IV1 and IV2 , based on a encoded reference stream EVREF. This reference encoded stream is first provided to an embodiment of an apparatus A as shown in Fig. 5, for extracting from it a reference input encoding structure IESD, which is provided as input reference data IREF to an embodiment of an encoder E7, such as e.g. the one presented in Fig. 4b. As explained with regards to that figure, this encoder embodiment is adapted to generate the respective encoded residual data for IV1 and IV2, and will subsequently and respectively combine these with the encoded input encoding structure such as to generate and provide the respective encoded output video streams IV1 and IV2.

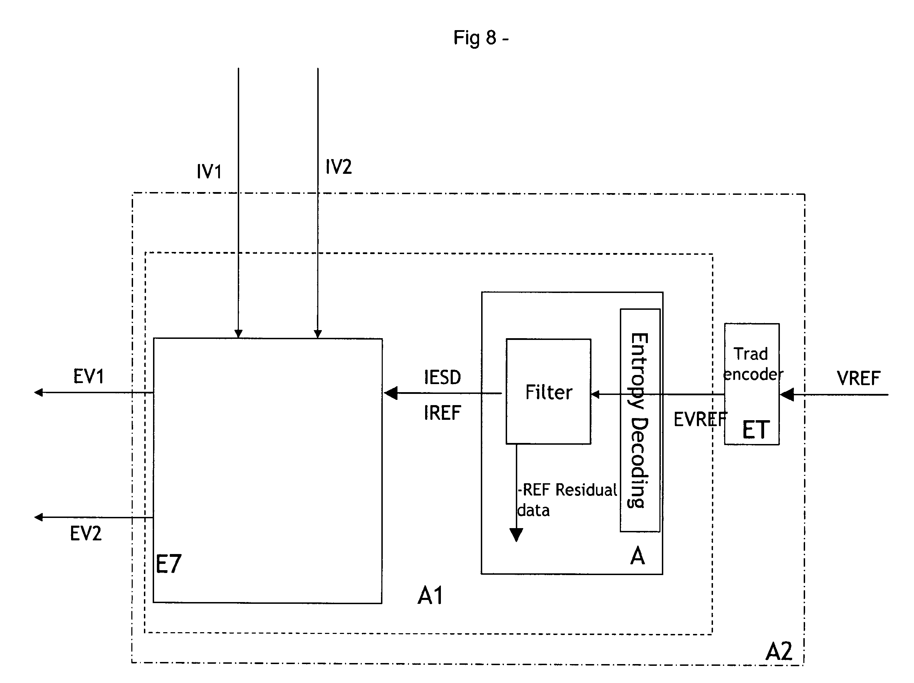

Another application is shown in Fig. 8 showing a second arrangement A2 which includes a first arrangement A1 as discussed in the previous paragraph, and an additional traditional encoder denoted ET. This traditional prior art encoder is adapted to encode a reference video stream or reference video data VREF according to prior art encoding methods and to provide an encoded reference video stream EVREF to a first arrangement A1. A1 will then be able to encode the two input video streams IV1 and IV2 to finally provide encoded output streams denoted EV1 and EV2 respectively.

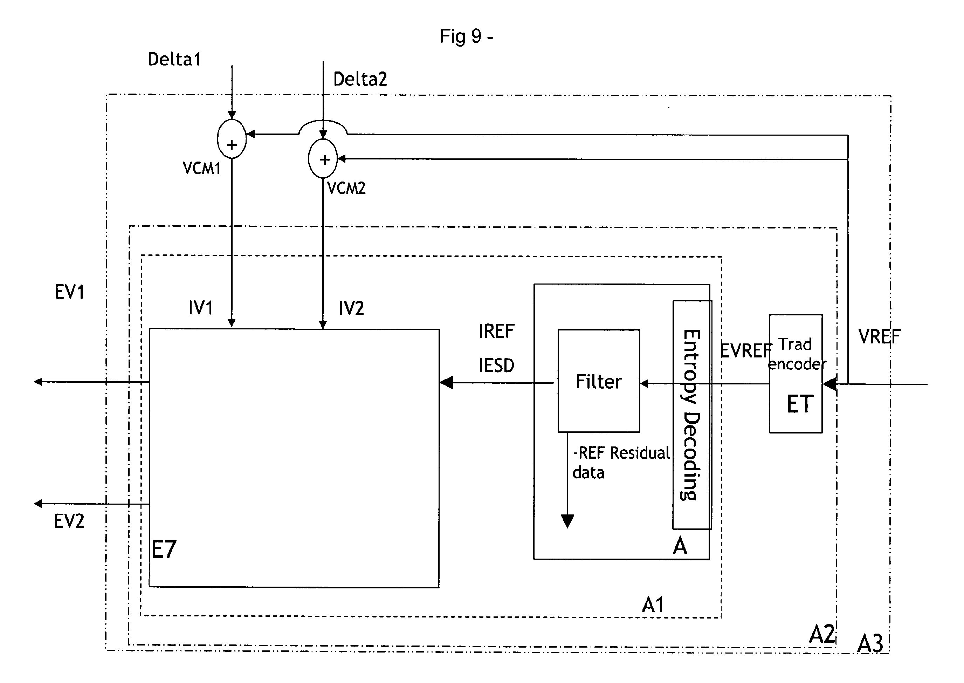

Fig. 9 shows an embodiment A3 of a third arrangement, incorporating itself an embodiment A2 of a second arrangement as shown on the previous figure. This third arrangement is adapted to receive a reference input video stream VREF, as well as respective input modification data inputs, respectively denoted delta 1 and delta 2. These minor modifications will, when added or combined at the pixel level with the reference stream VREF, result in respective input video streams IV1 and IV2. Delta 1 and delta 2 can be considered as describing how to alter the pixel values of VREF such as to derive at IV1 and IV2. Typically, they can contain a list of instructions, according to a prespecified format, that describe which pixel locations of VREF are to be modified and how the corresponding pixel values in VREF are to be altered in order to obtain IV1 and IV2. These instructions may for instance be expressed as a list of the pixels of VREF that are to be modified, where for each such pixel a modification is described, for example by a pixel value to be added to (or substracted from) the original pixel value, or by a new pixel value that must replace the original pixel value. Alternatively, in some other cases, the location of the pixel can be expressed in a more compact way than an list; for instance if the pixels to be modified are grouped in a rectangular region with sides parallel to the image sides, their location can be described by the top-left and bottom right pixel locations of that rectangle. Similarly, in yet other cases, the instructions to modify the pixel values can be expressed as some global image filtering information related to change in contrast, lighting, etc..., to be applied on some pixel area or on the whole frame, or may imply to replace the defined pixel area by a given video or a static image with a resolution that matches the pixel area, which video or image data is then also comprised within delta1 or delta2. Combinations of the previous possibilities are also possible. Such situations occur for instance in Lightweight personalization applications where for instance small logos, picture-in-picture (PiP) videos, or animated objects are added separately on top of an original video sequence, which can be considered as the reference video stream in this case. As the resulting video streams IV1 and IV2 will not differ significantly from the reference stream VREF, the encoding structure IESD from EVREF, is likely to still provide an efficient compression to encode the resulting IV1 and IV2 video streams.

A variant application relates to the addition or masking of some small parts of the video scene, e.g. in order to hide the appearance of some brand name or logo. Depending on what the reference input video will be, the delta's will either contain the logo ,in case the reference video does not contain this, or some hiding information, for instance another logo, or any other instruction detailing how to conceal the pixel values where the logo was present, to explicitly hide this in the other case.

Watermarking is another example of a lightweight and in principle visually imperceptible modification which can be applied in the pixel domain. In e.g. an IPTV scenario, watermarking allows to uniquely identify a subscriber based on a video stream received by his set top box. This does not require however to re-encode a personalized version of a video stream for each subscriber. Using at least to versions, the personalization of the individual streams can be obtained by switching from one version to another according to a unique temporal pattern. IDR pictures are natural candidates for such switching points.

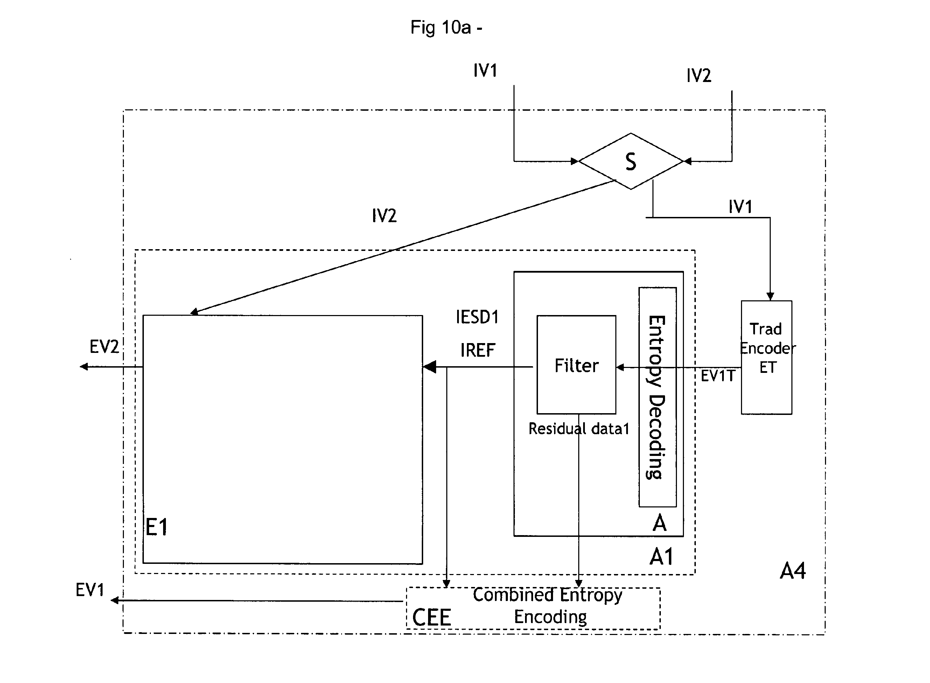

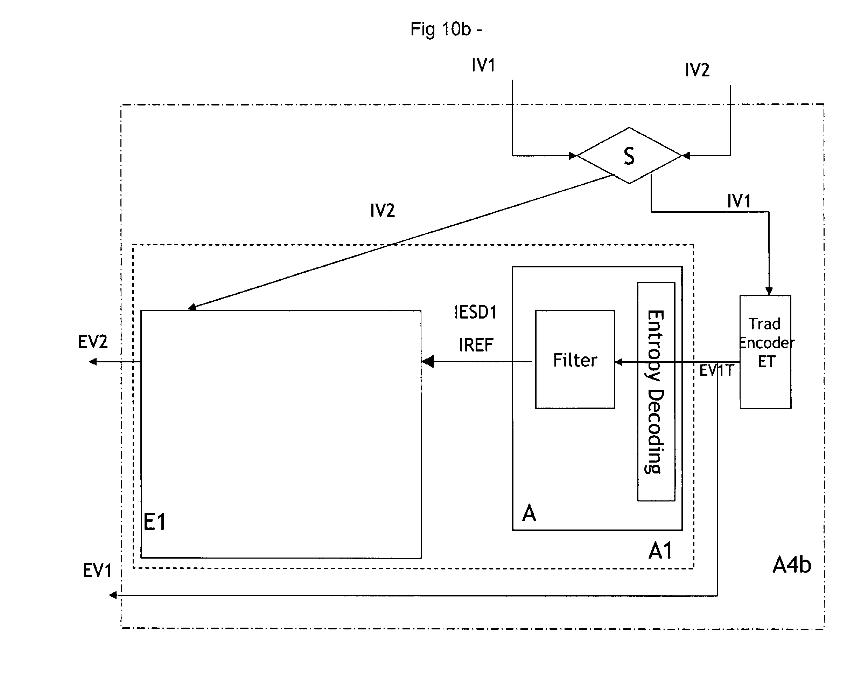

Figs. 10a and 10b yet show embodiment A4 , resp A4b, of a fourth arrangement for realizing another application. This arrangement is adapted to receive multiple input video streams. In both embodiments depicted in Figs. 10a and b only two input video streams IV1 and IV2 are shown for sake of simplicity and not to overload the figures, but this arrangement is also and especially suited for receiving more than 2 input video streams. The embodiments comprise a selection module denoted S, to select one of the input video streams as a reference stream, which will then be traditionally encoded by means of a traditional encoder ET. In both depicted embodiments the first input video IV1 is selected as reference stream. The reference encoded stream, denoted EV1T, is then provided to a first arrangement A1, as will be other other stream IV2. In the embodiment of Fig. 10b the encoded reference stream EV1T, is directly provided as an output encoded stream EV1 of the arrangement. In the embodiment of Fig. 10a, EVIT is also entropy decoded before undergoing a combined entropy encoding again in module CEE in accordance to the methods as explained in this document.

Embodiments of such a fourth arrangement can be used e.g. for Compression of stereo- or multiview-video. For applications using e.g. stereoscopy-based 3 dimensional video or free viewpoint video, one typically has to capture several views of the same object or scene. For instance, in stereoscopy, the two videos are typically very close to each other. When capturing multiple video streams spanning a wide range of viewpoints, the various streams can typically be grouped in clusters of streams with viewpoints close to each other. To store or transmit 2 or more video streams with close viewpoints, prior art methods will independently compress and store/transmit the various views, resulting in a significant cost as the complexity and the storage/transmission cost will scale linearly with the number of views to encode. This fourth arrangement offers an alternative comprising first encoding only one of the video streams and then re-using an encoding structure of the selected encoded stream to efficiently encode the other video streams. This drastically reduces the encoding complexity of the latter streams allowing all streams to share the same encoding structure on the storage/transmission medium. Especially for H.264 applications where a NAL unit A partition can be shared, this is a very cost-effective solution.

While the principles of the invention have been described above in connection with specific apparatus, it is to be clearly understood that this description is made only by way of example and not as a limitation on the scope of the invention, as defined in the appended claims.

## Claims

1. Method for encoding at least one video stream (IV1, IV2), said method includes the steps of :
- receiving said at least one input video stream (IV1, IV2)
- constructing of a sequence of predicted pixel blocks (PPB1,PPB2),
- processing said sequence of predicted pixel blocks (PPB1,PPB2) and corresponding blocks of said at least one input video stream (IV1, IV2) to obtain a sequence of processed residual pixel data (QRPD1, QRPD2),
wherein said sequence of predicted pixel blocks (PPB1, PPP2) is constructed from input encoding structure data (IESD) from reference input data (IREF), said input encoding structure data (IESD) further undergoing a combined entropy encoding step with said processed residual pixel data (QRPD1, QRPD2) to thereby obtain at least one encoded video stream (EV1, EV2).

2. Method according to claim 1 wherein said processing comprises generating a sequence of residual pixel blocks (RPB1,RPB2) from the difference between said predicted pixel blocks (PPB1,PPB2) and corresponding blocks of said at least one input video stream (IV1, IV2) , transforming and quantizing said sequence of residual pixel blocks (RPB1, RPB2) to thereby obtain said sequence of processed residual pixel data (QRPD1, QRPD2) .

3. Method according to any of the previous claims 1 or 2 wherein said reference input data (IREF) comprises encoded input encoding structure data (EIESD) such that the input encoding structure data (IESD) is derived from said reference input data (IREF) by entropy decoding said reference input data (IREF).

4. Method according to any of the claims 1 to 3 further including a step of comparing configuration data of said at least one input video stream (IV1) with said input encoding structure data (IESD) and that, if the data do not match, said at least one input video stream (lV1) is further preprocessed to thereby generate at least one updated input video stream (UlV1) such that the residual pixel blocks are determined from the difference between said predicted pixel blocks (PPB1) and corresponding blocks of said at least one updated video stream.

5. Method according to any of the claims 1-4 further comprising a step of extracting said reference input data (IREF) from an encoded reference video stream (EVREF, EVREFh).

6. Method according to claim 5 further comprising a step of encoding a reference video stream (VREF) to provide said encoded reference video stream (EVREF).

7. Method according to claim 6 wherein said at least one input video stream (IV1, IV2) is generated from said reference video stream (VREF) and input modification data (delta 1, delta2).

8. Method for encoding a plurality of video streams (IV1,IV2), said method including a step of selecting one of said video streams (IV1,IV2) as said reference video stream (VREF) which is further encoded to obtain said encoded reference video stream, and whereby the other video streams are further encoded in accordance with claim 5.

9. Encoder (E1- E8) for encoding at least one video stream (IV1, IV2) , said encoder including at least one input terminal (IN1,IN2) for receiving said at least one input video stream (IV1, IV2), said encoder being further adapted to construct a sequence of predicted pixel blocks (PPB1, PPB2), to process said sequence of predicted pixel blocks (PPB1, PPB2) and corresponding blocks of said at least one input video stream (IV1,IV2) to thereby obtain a sequence of processed residual pixel data (QPRD1, QPRD2),
wherein said encoder further includes an additional input terminal (INRef) for receiving reference input data (IREF) , and wherein said encoder is further adapted to construct said sequence of predicted pixel blocks (PPB1, PPB2) from input encoding structure data (IESD) from said reference input data (IREF) and to entropy encode said reference input data (IREF) in combination with said processed residual pixel data (QPRD1, QPRD2) to thereby generate at least one encoded video stream (EV1, EV2) for provision to at least one output terminal (OUT1, OUT2) of said encoder.

10. Encoder (E1-E8) according to claim 9 further comprising an entropy encoder and a combiner (C; C1, C2).

11. Encoder (E1-E8) according to claim 9 or 10, further being adapted to process said predicted pixel blocks (PPB1, PPB2) and corresponding blocks of said at least one input video stream (IV1, IV8) by generating a sequence of residual pixel blocks (RPB1,RPB2) from the difference between said predicted pixel blocks (PPB1,PPB2) and corresponding blocks of said at least one input video stream (IV1, IV2) , transforming and quantizing said sequence of residual pixel blocks (RPB1, RPB2) to thereby obtain said sequence of processed residual pixel data (QRPD1, QRPD2).

12. Encoder (E2, E3, E4, E6,) according to claim 9 wherein said reference input data (IREF) comprises encoded input encoding structure data (EIESD) and wherein said encoder (E2) further comprises an entropy decoder (ED1) for entropy decoding said reference input data (IREF) for generating said input encoding structure data (IESD).

13. Encoder (E8) according to any of claims 9-11 further being adapted to compare configuration data of said at least one input video stream(IV1) with said input encoding structure data (IESD) and, if the data do not match, to preprocess said at least one input video stream (IV1) to thereby generate at least one updated input video stream (UIV1) such that said residual pixel blocks (PPB1) are determined from the difference between said predicted pixel blocks and corresponding blocks of said at least one updated input video stream (UIVI).

14. First arrangement (A1) including an encoder (E1-E8) according to claims 9-13 and an apparatus (A,B) adapted to extract said reference input data (IREF) from an encoded reference video stream (EVREF, EVREFh) for provision to said encoder (E1-E8).

15. Second arrangement (A2) comprising a first arrangement (A1) according to claim 14 and an encoder (ET) for encoding a reference video stream (VREF) such as to provide the thus obtained encoded reference stream (EVREF) to said first arrangement (A1).

16. Third arrangement (A3) comprising a second arrangement (A2) according to claim 15 and comprising at least one video combining means (VCM1,VCM2) for generating said at least one input video stream (IV1,IV2) from said input reference video stream (VREF) and from input modification data (delta1 ,delta2) for provision to said second arrangement (A2).

17. Fourth arrangement (A4; A4b) adapted to receive a plurality of input video streams (IV1,IV2) and comprising selection means (S) for selecting an input video stream (IV1) of said plurality as a reference video stream, further comprising an encoder (ET) for encoding said reference video stream to thereby generate an encoded reference video stream (EV1) for provision to a first output of said fourth arrangement (A4, A4b) and for provision to a first arrangement (A1) according to claim 14 comprised within said fourth arrangement, said first arrangement being further adapted to encode the other input video stream (IV2) of said plurality, and to provide the other encoded video stream (EV2) to other outputs of said fourth arrangement (A4, A4b).
